# EUROPÄISCHE PATENTSCHRIFT

(11) **EP 1 675 244 B1**
(45) Veröffentlichungstag und Bekanntmachung des Hinweises auf die Patenterteilung: **12.06.2013**
(21) Anmeldenummer: 05007506.8
(22) Anmeldetag: 06.04.2005
(51) Int. Cl.: H02G 15/04, H02G 3/06

(54) **Verschraubung für abgedichtete Leitungsdurchführungen**
Screw gland for sealed conduit feedthroughs
Presse-étoupe pour traversées étanches de conduites

(30) Priorität: 21.12.2004 DE 102004061488
(43) Veröffentlichungstag der Anmeldung: 28.06.2006
(73) Patentinhaber: Pflitsch GmbH & Co. KG., 42499 Hückeswagen (DE)
(72) Erfinder: Gringmuth, Ulrich, 51688 Wipperfürth (DE); Binder, Karlheinz, 42499 Hückeswagen (DE); Brentzek, Olaf, 51688 Wipperfürth (DE)
(74) Vertreter: Köchling, Conrad-Joachim

(56) Entgegenhaltungen:
- DE-A1- 10 312 749
- DE-U- 7 022 042
- DE-U1- 29 722 267
- FR-A- 2 812 134
- GB-A- 2 138 638

## Beschreibung

Die Erfindung betrifft eine Verschraubung für abgedichtete Leitungsdurchführungen mit einem rohrförmigen Teil mit Außengewinde, insbesondere einem Doppelnippel, einer auf dieses aufschraubbaren Druckschraube mit axialer Durchgangsöffnung sowie einem zwischen dem rohrförmigen Teil und der Druckschraube angeordneten, eine mittige Durchstecköffnung aufweisenden Dicht- und Klemmteil, wobei das Dicht- und Klemmteil durch ein einziges Teil, nämlich einen elastischen Dichteinsatz gebildet ist, der am ersten Endbereich in Anpassung an die Druckschraube außenseitig entsprechend geformt ist und an der Druckschraube anliegt, der am zweiten Endbereich außenseitig etwa konisch verjüngt ist, wobei die Druckschraube im den zweiten Endbereich des Dichteinsatzes radial umgebenden Teil zylindrisch ausgebildet ist und in den Endbereich der Druckschraube übergeht, der Innengewinde aufweist, wobei das freie Ende des rohrförmigen Teils abgeschrägt sich zum freien Ende verjüngend ausgebildet ist und der zweite Endbereich des Dichteinsatzes sich mit seiner konisch verjüngten Außenfläche an der innen liegenden Verjüngung des freien Endes des rohrförmigen Teils abstützt, so dass beim Aufschrauben der Druckschraube auf das rohrförmige Teil der Dichteinsatz sowohl an seinem ersten Endbereich als auch an seinem zweiten Endbereich im Wesentlichen nach radial innen in Richtung auf den Durchsteckkanal verformt wird, wobei die axiale Durchgangsöffnung der Druckschraube zylindrisch ausgebildet ist.

Beispielsweise aus der DE 297 22 267 U1 ist eine Verschraubung ähnlicher Art bekannt. Derartige Verschraubungen werden bei Leitungsdurchführungen durch Gehäusewandungen, beispielsweise bei elektrischen Geräten, eingesetzt, um eine abgedichtete Einführung von Kabeln zu ermöglichen und eine Zugentlastung des durchgeführten Kabels zu erreichen. Im Stand der Technik ist es dazu üblich und notwendig, ein Dicht- und Klemmteil einzusetzen, welches aus zwei Elementen besteht, nämlich einem Klemmring und einem separaten Dichteinsatz. Der Klemmring weist dabei zahnartige Ausbildungen auf, die beim Aufschrauben der Druckschraube nach radial innen und zueinander gedrängt werden, so dass der Durchlassquerschnitt für das Kabel oder die Leitung verengt wird. Neben dieser Klemmringausbildung ist der Dichteinsatz erforderlich, um eine Dichtung gegen eindringende Feuchte sicherzustellen. Bei den üblichen Verschraubungen dieser Art kann es sich um einen Doppelnippel handeln, der mittels einer Kontermutter und einer untergelegten Dichtscheibe an einem Gehäusedurchbruch befestigt wird. Es ist auch möglich, das rohrförmige Teil als Bestandteil des Gehäuses auszubilden, so dass auf dieses rohrförmige Teil dann der Klemmring und der Dichteinsatz aufgesetzt und die Druckschraube aufgeschraubt wird.

Aus der GB 2 138 638 A ist eine Verschraubung gemäß Oberbegriff des Anspruches 1 bekannt. Hierbei ist am innenliegenden freien Ende des rohrförmigen Teils eine konische Fläche ausgebildet, an der der Dichteinsatz mit einer analogen konischen Endfläche anliegt.

Am der Lochung der Druckschraube zugewandten Ende weist der Dichteinsatz eine weitere konische Endfläche auf, die sich an einer konischen Fläche abstützt, die die Lochung innenseitig umgibt. Zwischen diesen konischen Flächen liegt der Dichteinsatz frei, das heißt, er ist mit erheblichem Abstand von dem zylindrischen Teil der Druckschraube angeordnet und berührt diesen nicht.

Ausgehend von diesem Stand der Technik liegt der Erfindung die Aufgabe zu Grunde, eine Verschraubung gattungsgemäßer Art zu schaffen, bei der mit wenigen Einzelteilen eine leichtgängige Betätigung der Druckschraube ermöglicht ist und bei der eine hervorragende Abdichtung und Zugentlastung erreicht wird.

Zur Lösung dieser Aufgabe wird vorgeschlagen, dass die Druckschraube an ihrem dem Ende des rohrförmigen Teils abgewandten Endbereich eine halbkugelähnliche Höhlung aufweist, der erste Endbereich des Dichteinsatzes dazu passend halbkugelartig geformt ist und an der halbkugelartigen Höhlung anliegt, dass die Druckschraube von dem den zweiten Endbereich des Dichteinsatzes radial umgebenden zylindrischen Teil nach innen abgestuft in einen Endbereich der Druckschraube übergeht, der das Innengewinde aufweist, so dass der eingefügte Dichteinsatz in der Druckschraube unverlierbar gehalten ist, und dass an den zylindrischen Endbereich innenseitig der Druckschraube eine radial gerichtete Ringfläche anschließt, die in die halbkugelähnliche Höhlung übergeht.

Entgegen einer herkömmlichen Ausbildung ist nicht ein Klemmteil und ein separates Dichtteil erforderlich, sondern die Funktion beider bisher notwendigen Elemente werden durch ein einziges Element ersetzt, nämlich den elastischen Dichteinsatz. Der Dichteinsatz kann aus elastomerem Werkstoff oder auch gummiartigem Werkstoff bestehen. Er ist quasi in Form einer Hülse ausgebildet, weist also keine zahnartigen Elemente oder dergleichen auf. Durch die entsprechende Ausbildung des Dichteinsatzes, der Druckschraube und des rohrförmigen Teiles wird erreicht, dass einerseits eine leichtgängige Betätigung möglich ist, da beim Aufschrauben der Druckschraube lediglich eine Verformung des elastischen Dichteinsatzes erfolgen muss, nicht aber eines im Stand der Technik notwendigen, relativ formstabilen Klemmkäfigs, wobei durch die erfindungsgemäße Ausbildung beim Aufschrauben der Druckschraube eine derartige Verformung des Dichteinsatzes erfolgt, dass dieser im wesentlichen nach radial innen in Richtung seines Durchsteckkanales verformt wird. Die Kraftverteilung wird in Richtung der Mittelachse des Durchsteckkanales gerichtet, so dass eine im Wesentlichen flächige Anpressung des Dichteinsatzes an das durchgeführte Kabel beziehungsweise an dessen Kabelmantel erfolgt. Durch die erfindungsgemäße Ausbildung wird eine radial nach innen gerichtete Verquetschung des Dichteinsatzes sowohl am der Druckschraube zugewandten Ende als auch an dem dem rohrförmigen Teil zugewandten Ende erreicht, so dass im Wesentlichen eine Verquetschung über die gesamte Länge des Dichteinsatzes erfolgt. Dies wiederum führt dazu, dass trotz geringen Kraftaufwandes zur Betätigung der Druckschraube eine außerordentlich gute Abdichtung und Zugentlastung des durchgeführten Kabels erreicht wird, weil der Dichteinsatz nicht nur an einer schmalen ringförmigen Zone, sondern über seine gesamte Länge an den Kabelmantel angepresst wird. Auf Grund der geringen Kräfte, die beim Aufschrauben der Verschraubung entstehen und die nach dem Verschrauben der Druckschraube und dem Verformen des Dichteinsatzes auftreten, kann die Druckschraube und auch das rohrförmige Element aus Kunststoff von geringer Wandstärke hergestellt werden. Selbstverständlich ist es auch möglich, die entsprechende Verschraubung aus metallischen Elementen, also einem metallischen, rohrförmigen Teil, beispielsweise einem metallischem, rohrförmigen Doppelnippel, und einer metallischen Druckschraube herzustellen. Durch das Zusammenwirken der halbkugelartigen Höhlung der Druckschraube mit dem dem Anlagebereich der halbkugelartigen Höhlung ebenfalls halbkugelartig geformten Dichteinsatz einerseits und durch die Verjüngung des Dichteinsatzes am anderen Ende und mit der Verjüngung zusammenwirkende Abschrägung oder dergleichen Verjüngung am freien Ende des rohrförmigen Teiles, wird in zwei voneinander beabstandeten Bereichen des Dichteinsatzes auf diesen radial eingewirkt, woraus die vorzügliche Abdichtung und insbesondere auch tatsächliche Zugentlastung mittels eines einzigen Teiles realisierbar ist.

Insbesondere wirkt eine großflächige radial symmetrische Kraft auf den Kabelmantel ein, ohne Gefahr der Verletzung des Kabelmantels und über einen großen Spannbereich.

Zudem wird durch diese Ausbildung verhindert, dass das Material des Dichteinsatzes beim Aufschrauben der Druckschraube aus der dem rohrförmigen Teil abgewandten Lochung der Druckschraube Material des Dichteinsatzes heraus quillt. Dieses Material wird durch den zylindrischen Kragen zurückgehalten, wobei zudem durch die zylindrische Ausbildung dieses Kragens noch eine erhöhte Kraftwirkung auf das in diesem Bereich nach dem Anziehen der Druckschraube befindliche Material ausgeübt wird.

Zudem wird durch diese Ausbildung im Bereich der Lochung der Druckschraube eine Trichterbildung des Dichteinsatzes vermieden.

Ein solcher Trichter ist insofern nachteilig, als sich in einem solchen Trichter Feuchtigkeit oder Wasser fangen könnte, welches auf Dauer zumindest als nachteilig angesehen wird, auch wenn dieses Wasser nicht durch die dichtende Verschraubung durchlaufen kann.

Dadurch, dass die Druckschaube in den zweiten Endbereich des Dichteinsatzes radial umgebenden Teil zylindrisch ausgebildet ist und danach nach innen abgestuft in den Endbereich der Druckschraube übergeht, der Innengewinde aufweist, wird eine unverlierbare Anordnung des Dichteinsatzes in der Druckschraube erreicht.

Eine vorteilhafte Weiterbildung wird zudem darin gesehen, dass bei nicht angezogener, lediglich auf dem rohrförmigen Teil vormontierter Druckschraube zwischen dem Mantel des Dichteinsatzes und dem zylindrischen inneren Bereich der Druckschraube ein Freiraum besteht.

Durch die Ausbildung dieses Freiraumes wird die gerichtete und gewünschte Verformung des Dichteinsatzes beim Anziehen der Druckschraube gefördert.

Bevorzugt ist zudem vorgesehen, dass die Wandstärke der Druckschraube im Bereich des zylindrischen Endbereiches größer als im übrigen Bereich der Druckschraube ist.

Durch diese Ausbildung wird sichergestellt, dass das Material des Dichteinsatzes, welches folglicherweise in dem Bereich des zylindrischen Endbereiches sich befindet, noch Dichtwirkung entfalten kann, weil der relativ dicke Endbereich eine ausreichende Reaktionskraft aufbauen kann.

Bevorzugt ist zudem vorgesehen, dass die Durchstecköffnung des Dichteinsatzes, insbesondere der die Durchstecköffnung bildende Kanal, an seiner dem rohrförmigen Teil abgewandten Mündung eine Fase aufweist.

Diese Ausbildung ist vorteilhaft zur Vermeidung einer oben schon beschriebenen Trichterbildung des Dichteinsatzes nach dem Anziehen der Druckschraube.

Eine besonders vorteilhafte Weiterbildung wird darin gesehen, dass der Dichteinsatz aus TPE besteht.

Dichteinsätze aus diesem Material sind an sich bekannt.

Eine unter Umständen bevorzugte Weiterbildung wird darin gesehen, dass zumindest die Druckschraube aus Kunststoff besteht und der Dichteinsatz an die Druckschraube angeformt ist.

Beispielsweise kann bei der Herstellung der Druckschraube aus Kunststoff in einem an sich bekannten Zweikomponentenspritzverfahren der Dichteinsatz innenseitig an die Druckschraube angeformt werden, so dass eine unverlierbare Einheit zwischen diesen beiden Teilen gebildet ist.

Bevorzugt ist zudem vorgesehen, dass die Außenfläche des Dichteinsatzes glatt ausgebildet ist.

Durch diese Ausbildung wird sichergestellt, dass die Drehung der Druckschraube leichtgängig gestaltet werden kann, weil die Druckschraube sich beim Anziehen an der glatten Außenfläche des Dichteinsatzes drehend abstützen kann, ohne dass der Dichteinsatz in Drehrichtung mitgenommen wird und eine Torsion des Dichteinsatzes erfolgt.

Obwohl die Verschraubung nach der vorbeschriebenen Art schon für unterschiedliche Durchmesser von durchzuführenden Leitungen oder Kabeln gestaltet ist, ist es möglich, die Verschraubung auch für noch größere Kabeldurchmesser brauchbar zu gestalten, wenn der Dichteinsatz im Bereich seiner Durchstecköffnung ein angeformtes, über eine dünnwandige Trennstelle abtrennbares, rohrartiges Reduzierstück aufweist.

Dabei kann besonders bevorzugt vorgesehen sein, dass das Reduzierstück über einen Kragen an die dem rohrförmigen Teil abgewandte Mündung des Dichteinsatzes angeformt ist, der die Solltrennstelle bildet.

Auch ist bevorzugt vorgesehen, dass das rohrförmige Reduzierstück mit der dem rohrförmigen Teil abgewandten Mündung des Dichteinsatzes bündig endet und über das andere Ende der Durchstecköffnung des Dichteinsatzes vorragt.

Das Reduzierstück kann für kleinere Kabeldurchmesser oder Leitungsdurchmesser an dem Dichteinsatz verbleiben. Sofern größere Kabeldurchmesser oder Leitungsdurchmesser durchgeführt werden sollen, kann das Reduzierstück abgetrennt werden. Das Reduzierstück ist nicht nur einstückig mit dem Dichteinsatz ausgebildet, sondern auch materialgleich mit diesem ausgebildet.

Bevorzugt ist zudem vorgesehen, dass das rohrförmige Reduzierstück und/oder der Dichteinsatz im Bereich der Wandung, die das rohrförmige Reduzierstück umgibt, Noppen oder dergleichen reibungserhöhende Vorsprünge aufweist.

Hierdurch wird erreicht, dass bei an ein durchgeführtes Kabel oder dergleichen angespannter Verschraubung auch durch dauerhaft an dem Kabel oder der Verschraubung angreifende Zugkräfte ein sicherer und bleibend richtiger Sitz des Dichteinsatzes samt Reduzierstück gewährleistet ist, ohne dass sich das Reduzierstück relativ zum umgebenden Bereich des Dichteinsatzes verschiebt.

Ein Ausführungsbeispiel der Erfindung ist in der Zeichnung dargestellt und im Folgenden näher beschrieben. Es zeigt:
- Figur 1: eine Ausführungsform der Erfindung in montiertem, aber noch nicht gespannten Zustand, in Längsschnitt gesehen;
- Figur 2: desgleichen in Draufsicht gesehen;
- Figur 3: die Verschraubung gemäß Figur 1 in gespanntem Zustand.

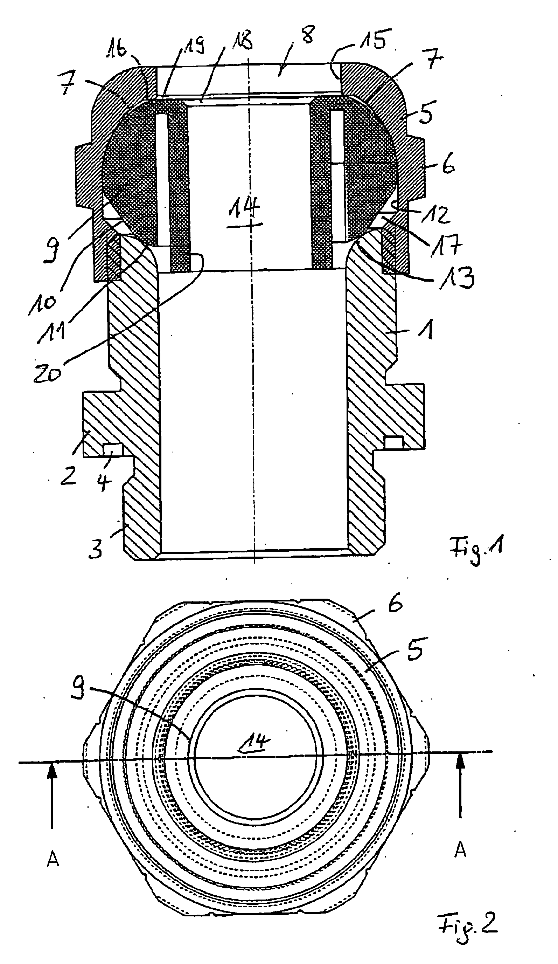

In der Zeichnung ist eine Verschraubung für abgedichtete Leitungsdurchführungen gezeigt. Sie besteht aus einem rohrförmigen Teil 1 mit Außengewinde, im Ausführungsbeispiel einem Doppelnippel mit Polygonansatz 2 zum Angriff eines Werkzeuges und zusätzlichen Gewindestutzen 3, der durch eine Lochung einer Gehäusewandung gesteckt und durch eine Kontermutter angeschraubt werden kann. Des Weiteren ist ein Raum 4 zur Anordnung eines Dichtringes oder dergleichen vorgesehen. Des Weiteren besteht die Verschraubung aus einer auf das rohrförmige Teil 1 aufschraubbaren Druckschraube 5, die ebenfalls einen Polygonansatz 6 zur Betätigung mittels eines Werkzeuges aufweist. Die Druckschraube ist kuppelförmig ausgebildet und weist an ihrem nach unten auslaufenden Ende Innengewinde auf, welches mit dem Außengewinde des rohrförmigen Teils 1 korrespondiert. An ihrem dem Ende des rohrförmigen Teils abgewandten Endbereich weist die Druckschraube 5 innenseitig eine halbkugelartige Höhlung 7 auf. Ferner weist die Druckschraube 5 eine Durchstecköffnung 8 für eine Leitung oder ein Kabel auf. Um eine zugentlastete und abgedichtete Kabeldurchführung zu schaffen, ist ein elastischer Dichteinsatz 9 vorgesehen, der am ersten, in der Zeichnung oberen Endbereich in Anpassung an die halbkugelartige Höhlung 7 der Druckschraube 5 außenseitig halbkugelartig geformt ist und in der nichtgespannten Lage gemäß Figur 1 an der halbkugelartigen Höhlung 7 im Wesentlichen anliegt. Im zweiten, in der Zeichnung unteren Endbereich ist der Dichteinsatz 9 außenseitig etwa konisch verjüngt (Verjüngung 10) und läuft vorzugsweise gerundet aus (Rundung 11). Die Druckschraube 5 ist im den zweiten Endbereich des Dichteinsatzes 9 radial umgebenden Teil zylindrisch ausgebildet (zylindrische Form 12) und geht dann nach innen abgestuft in den Endbereich der Druckschraube 5 über, der Innengewinde aufweist. Durch diese Anordnung ist der Dichteinsatz 9 nach dem Einfügen in die Druckschraube 5 unverlierbar gehalten.

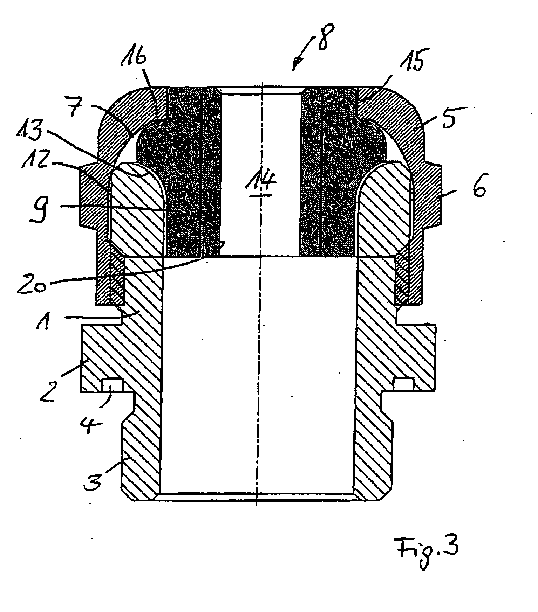

Das freie Ende des rohrförmigen Teils 1 ist abgeschrägt, konisch oder gerundet, sich zum freien Ende verjüngend ausgebildet (Verjüngung 13), wobei der zweite Endbereich des Dichteinsatzes 9 sich mit seiner konisch verjüngten Außenfläche 10, 11 an der innen liegenden Verjüngung 13 des freien Endes des rohrförmigen Teils 1 abstützt. Hierdurch wird erreicht, dass beim Aufschrauben der Druckschraube 5 auf das rohrförmige Teil 1 der Dichteinsatz 9 sowohl an seinem ersten (oberen) Endbereich als auch an seinem zweiten (unteren) Endbereich im Wesentlichen nach radial innen in Richtung auf den Durchsteckkanal 14 verformt wird, wie insbesondere aus der Gegenüberstellung der Zeichnungsfigur 1 und Figur 3 ersichtlich ist.

Die axiale Durchgangsöffnung 8 der Druckschraube 5 ist im an die halbkugelartige Höhlung 7 anschließenden, dem rohrförmigen Teil 1 abgewandten Endbereich zylindrisch ausgebildet (zylindrischer Kragen 15), wobei an den zylindrischen Endbereich (Kragen 15) eine radial gerichtete Ringfläche 16 anschließt, die an die halbkugelartige Höhlung 7 übergeht.

Bei nicht angezogener, lediglich auf dem rohrförmigen Teil 1 vormontierter Druckschraube 5 (wie auch in Figur 1 ersichtlich) besteht zwischen dem Mantel des Dichteinsatzes 5 und dem zylindrischen inneren Bereich 12 der Druckschraube 5 ein Freiraum 17, in welchen beim Anspannen der Druckschraube 5 verpresstes Material des Dichteinsatzes 9 ausweichen kann.

Vorzugsweise ist die Wandstärke der Druckschraube 5 im Bereich des zylindrischen Endbereiches 15 größer als im übrigen Bereich der Druckschraube, um im Bereich dieses Endbereiches 15 Druckkräfte in der Montageendposition auf den Dichteinsatz 9 ausüben zu können, wie in Figur 3 ersichtlich ist. Die Durchstecköffnung 14 des Dichteinsatzes 9, insbesondere der die Durchstecköffnung 14 bildende Kanal, ist an seiner dem rohrförmigen Teil 1 abgewandten Mündung mit einer Fase 18 versehen, was vorteilhaft ist, um beim Anziehen der Druckschraube 5 und beim Verspannen des Dichteinsatzes in die Position gemäß Figur 3 eine trichterförmige Verformung des Dichteinsatzes 9 im außen liegenden Mündungsbereich zu vermeiden.

Vorzugsweise besteht der Dichteinsatz 9 aus TPE. Zusätzlich weist der Dichteinsatz 9 im Bereich seiner Durchstecköffnung 14 ein angeformtes, über eine dünnwandige Trennstelle 19 abtrennbares, rohrartiges Reduzierstück 20 auf. Dieses Reduzierstück 20 ist über einen Kragen (19) an die dem rohrförmigen Teil 1 abgewandte Mündung des Dichteinsatzes 9 angeformt. In nicht gespanntem Zustand der Verschraubung findet das rohrförmige Reduzierstück 20 bündig mit der Mündung des Dichteinsatzes 9 (in der Zeichnung oben) und andererseits über das untere Ende der Durchstecköffnung des Dichteinsatzes 9 vor um beim Anziehen der Druckschraube und beim Verspannen des Dichteinsatzes 9 in die Position gemäß Figur 3 schließt auch das untere Ende des Reduzierstückes 20 vorzugsweise bündig mit dem verformten Körper des Dichteinsatzes 9 ab.

Wie insbesondere aus der Gegenüberstellung gemäß Figur 1 und Figur 3 ersichtlich, weist die Verschraubung einen relativ großen Spannbereich zur Durchführung unterschiedlich bemessener Leitungen auf, wobei im Spannzustand gemäß Figur 3 eine Flächenpressung des Dichteinsatzes 9 quasi über die gesamte Länge des Dichteinsatzes an den Mantel des durchgeführten Kabels oder der durchgeführten Leitung erreicht wird. Dies wird dennoch mit relativ geringen Schraubkräften erreicht, wobei die erfindungsgemäße Ausbildung mit einem einzigen Element, nämlich dem Dichteinsatz 9, sowohl die Abdichtung als auch die Zugentlastung ermöglicht.

## Patentansprüche

1. Verschraubung für abgedichtete Leitungsdurchführungen mit einem rohrförmigen Teil (1) mit Außengewinde, insbesondere einem Doppelnippel, einer auf dieses aufschraubbaren Druckschraube (5) mit axialer Durchgangsöffnung (8) sowie einem zwischen dem rohrförmigen Teil (1) und der Druckschraube (5) angeordneten, eine mittige Durchstecköffnung aufweisenden Dicht- und Klemmteil, wobei das Dicht- und Klemmteil durch ein einziges Teil, nämlich einen elastischen Dichteinsatz (9) gebildet ist, der am ersten Endbereich in Anpassung an die Druckschraube (5) außenseitig entsprechend geformt ist und an der Druckschraube (5) anliegt, der am zweiten Endbereich außenseitig etwa konisch verjüngt ist, wobei die Druckschraube (5) im den zweiten Endbereich des Dichteinsatzes (9) radial umgebenden Teil zylindrisch ausgebildet ist und in den Endbereich der Druckschraube (5) übergeht, der Innengewinde aufweist, wobei das freie Ende des rohrförmigen Teils (1) abgeschrägt sich zum freien Ende verjüngend ausgebildet ist und der zweite Endbereich des Dichteinsatzes (9) sich mit seiner konisch verjüngten Außenfläche (10) an der innen liegenden Verjüngung (13) des freien Endes des rohrförmigen Teils (1) abstützt, so dass beim Aufschrauben der Druckschraube (5) auf das rohrförmige Teil (1) der Dichteinsatz (9) sowohl an seinem ersten Endbereich als auch an seinem zweiten Endbereich im Wesentlichen nach radial innen in Richtung auf den Durchsteckkanal (14) verformt wird, wobei die axiale Durchgangsöffnung (8) der Druckschraube (5) zylindrisch ausgebildet ist, **dadurch gekennzeichnet, dass** die Druckschraube (5) an ihrem dem Ende des rohrförmigen Teils (1) abgewandten Endbereich eine halbkugelähnliche Höhlung (7) aufweist, der erste Endbereich des Dichteinsatzes (9) dazu passend halbkugelartig geformt ist und an der halbkugelartigen Höhlung (7) anliegt, dass die Druckschraube (5) von dem den zweiten Endbereich des Dichteinsatzes (9) radial umgebenden zylindrischen Teil nach innen abgestuft in einen Endbereich der Druckschraube (5) übergeht, der das Innengewinde aufweist, so dass der eingefügte Dichteinsatz (9) in der Druckschraube (5) unverlierbar gehalten ist, und dass an den zylindrischen Endbereich (15) innenseitig der Druckschraube (5) eine radial gerichtete Ringfläche (16) anschließt, die in die halbkugelähnliche Höhlung (7) übergeht.

2. Verschraubung nach Anspruch 1, **dadurch gekennzeichnet, dass** bei nicht angezogener, lediglich auf dem rohrförmigen Teil (1) vormontierter Druckschraube (5) zwischen dem Mantel des Dichteinsatzes (9) und dem zylindrischen inneren Bereich (12) der Druckschraube (5) ein Freiraum (17) besteht.

3. Verschraubung nach einem der Ansprüche 1 oder 2, **dadurch gekennzeichnet, dass** die Wandstärke der Druckschraube (5) im Bereich des zylindrischen Endbereiches (15) größer als im übrigen Bereich der Druckschraube (5) ist.

4. Verschraubung nach einem der Ansprüche 1 bis 3, **dadurch gekennzeichnet, dass** die Durchstecköffnung (14) des Dichteinsatzes (9), nämlich der die Durchstecköffnung bildende Kanal, an seiner dem rohrförmigen Teil (1) abgewandten Mündung eine Fase (18) aufweist.

5. Verschraubung nach einem der Ansprüche 1 bis 4, **dadurch gekennzeichnet, dass** der Dichteinsatz (9) aus TPE besteht.

6. Verschraubung nach einem der Ansprüche 1 bis 5, **dadurch gekennzeichnet, dass** zumindest die Druckschraube (5) aus Kunststoff besteht und der Dichteinsatz (9) an die Druckschraube (5) angeformt ist.

7. Verschraubung nach einem der Ansprüche 1 bis 6, **dadurch gekennzeichnet, dass** die Außenfläche des Dichteinsatzes (9) glatt ausgebildet ist.

8. Verschraubung nach einem der Ansprüche 1 bis 7, **dadurch gekennzeichnet, dass** der Dichteinsatz (9) im Bereich seiner Durchstecköffnung (14) ein angeformtes, über eine dünnwandige Trennstelle (19) abtrennbares, rohrartiges Reduzierstück (20) aufweist.

9. Verschraubung nach Anspruch 8, **dadurch gekennzeichnet, dass** das Reduzierstück (20) über einen Kragen an die dem rohrförmigen Teil (1) abgewandte Mündung des Dichteinsatzes (9) angeformt ist, der die Solltrennstelle bildet.

10. Verschraubung nach Anspruch 8 oder 9, **dadurch gekennzeichnet, dass** das rohrförmige Reduzierstück (20) mit der dem rohrförmigen Teil (1) abgewandten Mündung des Dichteinsatzes (9) bündig endet und über das andere Ende der Durchstecköffnung (14) des Dichteinsatzes (9) vorragt.

11. Verschraubung nach einem der Ansprüche 8 bis 10, **dadurch gekennzeichnet, dass** das rohrförmige Reduzierstück (20) und/oder der Dichteinsatz (9) im Bereich der Wandung, die das rohrförmige Reduzierstück (20) umgibt, Noppen oder dergleichen reibungserhöhende Vorsprünge aufweist.

## Claims

1. A gland for sealed cable entries comprising a tubular part (1) with an external thread, in particular a double nipple, a pressure screw (5) with an axial through-hole (8) screwable thereonto and a sealing and clamping part arranged between the tubular part (1) and the pressure screw (5) and comprising a central feed-through opening, the sealing and clamping part being formed by a single part, namely an elastic sealing insert (9), the outside of which is correspondingly designed in shape at the first end area in adaptation to the pressure screw (5) and abuts the pressure screw (5), the outside of which is approximately conically tapering at the second end area, the pressure screw (5) being shaped cylindrically in the part radially surrounding the second end area of the sealing insert (9) and is followed by the end area of the pressure screw (5) that comprises an internal thread, the free end of the tubular part (1) being beveled and tapering toward the free end, and the second end area of the sealing insert (9) abutting with its conically tapering outside surface (10) the inside taper (13) of the free end of the tubular part (1), such that when the pressure screw (5) is screwed onto the tubular part (1), the sealing insert (9) will be deformed at its first end area as well as its second end area essentially radially inwardly in the direction of the feed-through channel (14), the axial through-hole (8) of the pressure screw (5) being cylindrical, **characterized by** that the pressure screw (5) has at its end area facing away from the end the tubular parts (1) a semispherical cavity (7), the first end area of the sealing insert (9) is designed in a matching manner semispherically in shape and abuts the semispherical cavity (7), that the pressure screw (5) transitions in a stepped manner inwardly from the cylindrical part radially surrounding the second end area of the sealing insert (9) into an end area of the pressure screw (5) comprising the internal thread, so that the inserted sealing insert (9) is held in the pressure screw (5) in a captive manner, and that at the cylindrical end area (15) on the inside of the pressure screw (5) follows a radially oriented annular surface (16) that transitions into the semispherical cavity (7).

2. The gland according to claim 1, **characterized by** that when the pressure screw (5) is not tightened, but only pre-assembled on the tubular part (1), a clearance (17) exists between the jacket of the sealing insert (9) and the cylindrical inner portion (12) of the pressure screw (5).

3. The gland according to one of claims 1 or 2, **characterized by** that the wall thickness of the pressure screw (5) is in the area of the cylindrical end area (15) larger than in the remaining area of the pressure screw (5).

4. The gland according to one of claims 1 to 3, **characterized by** that the feed-through opening (14) of the sealing insert (9), in particular the channel forming the feed-through opening, has a chamfer (18) at its orifice facing away from the tubular part (1).

5. The gland according to one of claims 1 to 4, **characterized by** that the sealing insert (9) is made of TPE.

6. The gland according to one of claims 1 to 5, **characterized by** that at least the pressure screw (5) is made of a plastic material, and the sealing insert (9) is integrally formed at the pressure screw (5).

7. The gland according to one of claims 1 to 6, **characterized by** that the outside surface of the sealing insert (9) is smooth.

8. The gland according to one of claims 1 to 7, **characterized by** that the sealing insert (9) has in the area of its feed-through opening (14) an integrally formed tubular reducing piece (20) removably coupled by a thin-walled separating area (19).

9. The gland according to claim 8, **characterized by** that the reducing piece (20) is integrally formed by means of a collar at the orifice of the sealing insert (9) facing away from the tubular part (1), said collar forming the desired separating area.

10. The gland according to claim 8 or 9, **characterized by** that the tubular reducing piece (20) ends level with the orifice of the sealing insert (9) facing away from the tubular part (1) and protrudes beyond the other end of the feed-through opening (14) of the sealing insert (9).

11. The gland according to one of claims 8 to 10, **characterized by** that the tubular reducing piece (20) and/or the sealing insert (9) has, in the area of the wall surrounding the tubular reducing piece (20), knobs or other projections enhancing friction.

## Revendications

1. Presse-étoupe pour traversées de câbles étanches comprenant un élément tubulaire (1) avec un filetage extérieur, en particulier un raccord double, une vis de serrage (5) avec un trou de passage axial (8) vissable sur celui-ci et un élément d'étanchéité et de serrage arrangé entre l'élément tubulaire (1) et la vis de serrage (5) et comprenant une ouverture d'introduction centrale, l'élément d'étanchéité et de serrage étant formé par une seule pièce, c'est-à-dire un insert d'étanchéité (9) élastique, l'extérieur duquel est formé à la première zone d'extrémité de manière à s'adapter à la vis de serrage (5) et vient en butée contre la vis de serrage (5), l'extérieur duquel est taillé environ en cône sur la deuxième zone d'extrémité, la vis de serrage (5) ayant une forme cylindrique dans la partie radialement entourant la deuxième zone d'extrémité de l'insert d'étanchéité (9) et étant suivie par la zone d'extrémité de la vis de serrage (5) qui comprend un filetage intérieur, l'extrémité libre de l'élément tubulaire (1) étant biseautée et taillée en cône vers l'extrémité libre, et la deuxième zone d'extrémité de l'insert d'étanchéité (9) venant en butée avec sa surface extérieure (10) taillée en cône contre le cône intérieur (13) de l'extrémité libre de l'élément tubulaire (1), de façon que, si la vis de serrage (5) est vissée sur l'élément tubulaire (1), l'insert d'étanchéité (9) soit déformé à sa première zone d'extrémité aussi bien qu'à sa deuxième zone d'extrémité sensiblement radialement vers l'intérieur dans la direction du canal d'introduction (14), l'ouverture de passage axiale (8) de la vis de serrage (5) étant cylindrique, **caractérisée en ce que** la vis de serrage (5) comprend à sa zone d'extrémité opposée à l'extrémité de l'élément tubulaire (1) une cavité hémisphérique (7), la première zone d'extrémité de l'insert d'étanchéité (9) a une forme hémisphérique d'une manière correspondante et vient en butée contre la cavité hémisphérique (7), que la vis de serrage (5) effectue une transition à partir de la partie cylindrique radialement entourant la deuxième zone d'extrémité de l'insert d'étanchéité (9) en dégradé vers l'intérieur dans une zone d'extrémité de la vis de serrage (5) comprenant le filetage intérieur, de façon que l'insert d'étanchéité (9) inséré soit retenu dans la vis de serrage (5) de manière imperdable, et qu'à la zone d'extrémité (15) cylindrique du côté intérieur de la vis de serrage (5) suit une surface annulaire (16) orientée radialement qui effectue une transition dans la cavité hémisphérique (7).

2. Presse-étoupe selon la revendication 1, **caractérisée en ce que**, si la vis de serrage (5) n'est pas serrée, mais seulement pré-assemblée sur l'élément tubulaire (1), un débattement (17) existe entre la gaine de l'insert d'étanchéité (9) et la partie intérieure cylindrique (12) de la vis de serrage (5).

3. Presse-étoupe selon une des revendications 1 ou 2, **caractérisée en ce que** l'épaisseur de paroi de la vis de serrage (5) dans le domaine de la zone d'extrémité cylindrique (15) est supérieure de celle-ci dans le restant de la vis de serrage (5).

4. Presse-étoupe selon une des revendications 1 à 3, **caractérisée en ce que** l'ouverture d'introduction (14) de l'insert d'étanchéité (9), en particulier le canal formant l'ouverture d'introduction, comprend un chanfrein (18) à son embouchure d'un côté opposé à l'élément tubulaire (1).

5. Presse-étoupe selon une des revendications 1 à 4, **caractérisée en ce que** l'insert d'étanchéité (9) consiste en TPE.

6. Presse-étoupe selon une des revendications 1 à 5, **caractérisée en ce qu'**au moins la vis de serrage (5) consiste en une matière plastique, et l'insert d'étanchéité (9) est intégré à la vis de serrage (5).

7. Presse-étoupe selon une des revendications 1 à 6, **caractérisée en ce que** la surface extérieure de l'insert d'étanchéité (9) est réalisée de manière lisse.

8. Presse-étoupe selon une des revendications 1 à 7, **caractérisée en ce que** l'insert d'étanchéité (9) comprend dans le domaine de son ouverture d'introduction (14) une pièce de réduction tubulaire (20) intégrée et accouplée de manière amovible par une zone de séparation (19) à parois minces.

9. Presse-étoupe selon la revendication 8, **caractérisée en ce que** la pièce de réduction (20) est intégrée au moyen d'un collet à l'embouchure de l'insert d'étanchéité (9) d'un côté opposé à l'élément tubulaire (1), ce collet formant la zone de séparation de consigne.

10. Presse-étoupe selon la revendication 8 ou 9, **caractérisée en ce que** la pièce de réduction tubulaire (20) se termine au niveau de l'embouchure de l'insert d'étanchéité (9) d'un côté opposé à l'élément tubulaire (1) et fait saillie de l'autre extrémité de l'ouverture d'introduction (14) de l'insert d'étanchéité (9).

11. Presse-étoupe selon une des revendications 8 à 10, **caractérisée en ce que** la pièce de réduction tubulaire (20) et/ou l'insert d'étanchéité (9) comprend, dans la zone de la paroi entourant la pièce de réduction tubulaire (20), des boutons ou d'autres saillies d'augmentation de la friction.
